# EUROPEAN PATENT APPLICATION

(11) **EP 4 561 169 A1**
(43) Date of publication of application: **28.05.2025**
(21) Application number: 23842091.3
(22) Date of filing: 30.06.2023
(51) Int. Cl.: H04W 36/00

(54) **INFORMATION TRANSMISSION METHOD, APPARATUS AND NETWORK NODE**

(30) Priority: 22.07.2022 CN 202210873469
(71) Applicant: Datang Mobile Communications Equipment Co., Ltd., Beijing 100085 (CN)
(72) Inventor: WANG, Ruiwei, Beijing 100085 (CN); ZHOU, Ye, Beijing 100085 (CN); YAN, Nan, Beijing 100085 (CN); LIU, Aijuan, Beijing 100085 (CN)
(74) Representative: Studio Torta S.p.A.
(86) International application number: PCT/CN2023/104910
(87) International publication number: WO 2024/017026

(57) **Abstract**

Provided are an information communication method and apparatus, and a network node. The information communication method of this application includes: transmitting a measurement request message to a second network node, where the measurement request message is used to request the second network node to perform measurement on a target end according to a measurement requirement, and the target end includes a terminal and/or a cell; and receiving a target measurement result of the measurement performed on the target end transmitted by the second network node in a case where the measurement requirement is able to meet.

## Description

### CROSS-REFERENCE TO RELATED APPLICATION

This application claims a priority to Chinese Patent Application No. 202210873469.0 filed on July 22, 2022, the present disclosure s of which are incorporated by reference herein in their entirety.

### TECHNICAL FIELD

The present disclosure relates to the field of communication technologies, and in particular to an information communication method and apparatus, and a network node.

### BACKGROUND

In order to improve the operational efficiency and the service quality of the 5th generation mobile communication technology (5th Generation Mobile Communication Technology, short for 5G), it is currently proposed that a prediction mechanism based on artificial intelligence (Artificial Intelligence, AI) can be applied to a 5G system, and AI is applied to handover optimization, cell load balancing, energy conservation and other functions, which are currently being studied.

In the above application scenarios, AI may be deployed on a base station to assist in handover prediction and making a decision. That is, the AI technology may be used to intelligently select users to perform handover and determine handover timing and a target cell for handover. During a time period when the AI technology is used to make decisions and execute actions, it is necessary to collect result information for correction and verification of an AI model.

However, the current technology cannot meet the requirement for collection and feedback of measurement quantities between network nodes, resulting in that a prediction result cannot be effectively corrected and optimized by using the AI technology.

### SUMMARY

The present disclosure is to provide an information communication method and apparatus, and a network node, to solve a problem in related technologies that a prediction result cannot be effectively corrected and optimized by using the AI technology, because it is unable to meet the requirements for collection and feedback of measurement quantities between network nodes.

In order to achieve the above objective, in a first aspect, an embodiment of the present disclosure provides an information communication method, which is applied to a first network node. The method includes:
transmitting a measurement request message to a second network node, where the measurement request message is used to request the second network node to perform measurement on a target end according to a measurement requirement, and the target end includes a terminal and/or a cell; and
receiving a target measurement result of the measurement performed on the target end transmitted by the second network node in a case where the measurement requirement is able to meet.

Optionally, the measurement request message includes one or more of the following information:
identification information of the target end;
time information related to the measurement on the target end; or
a measurement quantity of the target end.

Optionally, the time information related to the measurement on the target end includes at least one of the following:
a starting time when the performing measurement on the target end starts;
an ending time when the performing measurement on the target end ends;
a period for transmitting the measurement result obtained by performing measurement on the target end to the first network node; or
a frequency for transmitting the measurement result obtained by performing measurement on the target end to the first network node.

Optionally, the measurement quantity of the target end includes at least one of the following:
a reporting parameter of terminal measurement;
a statistics quantity of terminal measurement at layer 2;
a stable residence time of the terminal;
quality of experience (QoE) visible to the second network node;
minimization of drive tests;
a statistics quantity of cell measurement at layer 2;
an energy efficiency of the cell; or
a key performance indicator (KPI) of the cell.

Optionally, the method further includes: obtaining first decision information of the first network node, where the first decision information is used to make a decision to switch the terminal from the first network node to the second network node, where the transmitting the measurement request message to the second network node includes: transmitting the measurement request message to the second network node according to the first decision information, where the measurement request message is used to request the second network node to perform measurement on the terminal according to the measurement requirement.

Optionally, the transmitting the measurement request message to the second network node includes: transmitting the measurement request message to the second network node through a handover request message.

Optionally, the method further includes: obtaining second decision information of the first network node, where the second decision information is used to make a decision to establish a dual connection for the terminal at the first network node and select a candidate secondary node, where the transmitting the measurement request message to the second network node includes: transmitting the measurement request message to the second network node according to the second decision information, where the measurement request message is used to request the second network node to perform measurement on the terminal according to the measurement requirement.

Optionally, the transmitting the measurement request message to the second network node includes: transmitting the measurement request message to the second network node through a secondary node addition request message.

Optionally, the method further includes: obtaining third decision information of the first network node, where the third decision information is used to make a decision to switch terminals from the first network node to the second network node in batches, or to make a decision to establish dual connections for terminals in batches at the first network node and select candidate secondary nodes.

Optionally, the transmitting the measurement request message to the second network node includes: transmitting the measurement request message to the second network node according to the third decision information, where the measurement request message is used to request the second network node to perform measurement on the terminal and/or the cell according to the measurement requirement.

In a second aspect, an embodiment of the present disclosure further provides an information communication method, applied to a second network node. The method includes:
receiving a measurement request message transmitted by a first network node, where the measurement request message is used to request the second network node to perform measurement on a target end according to a measurement requirement, and the target end includes a terminal and/or a cell;
performing measurement on the target end according to the measurement requirement to obtain a target measurement result in a case where the measurement requirement is able to meet; and
transmitting the target measurement result to the first network node.

Optionally, the measurement request message includes one or more of the following information:
identification information of the target end;
time information related to the measurement on the target end; or
a measurement quantity of the target end.

Optionally, the time information related to the measurement on the target end includes at least one of the following:
a starting time when the performing measurement on the target end starts;
an ending time when the performing measurement on the target end ends;
a period for transmitting the measurement result obtained by performing measurement on the target end to the first network node; or
a frequency for transmitting the measurement result obtained by performing measurement on the target end to the first network node.

Optionally, the measurement quantity of the target end includes at least one of the following:
a reporting parameter of terminal measurement;
a statistics quantity of terminal measurement at layer 2;
a stable residence time of the terminal;
quality of experience (QoE) visible to the second network node;
minimization of drive tests;
a statistics quantity of cell measurement at layer 2;
an energy efficiency of the cell; or
a key performance indicator (KPI) of the cell.

Optionally, the target measurement result includes at least one of the following:
a measurement result of a reporting parameter of terminal measurement;
a measurement result of a statistics quantity of terminal measurement at layer 2;
a measurement result of a stable residence time of the terminal;
a measurement result of quality of experience (QoE) visible to the second network node;
a measurement result of minimization of drive tests;
a measurement result of a statistics quantity of cell measurement at layer 2;
a measurement result of an energy efficiency of the cell; or
a measurement result of a KPI of the cell.

Optionally, the receiving the measurement request message transmitted by the first network node includes: receiving the measurement request message transmitted by the first network node through a handover request message, where the measurement request message is used to request the second network node to perform measurement on the terminal according to the measurement requirement.

Optionally, the receiving the measurement request message transmitted by the first network node includes: receiving the measurement request message transmitted by the first network node through a secondary node addition request message, where the measurement request message is used to request the second network node to perform measurement on the terminal according to the measurement requirement.

In a third aspect, an embodiment of the present disclosure further provides a network node. The network node is a first network node, and includes a memory, a transceiver and a processor; the memory is configured to store program instructions; the transceiver is configured to transmit and receive data under the control of the processor; and the processor is configured to read the program instructions in the memory to perform the following operations:
transmitting a measurement request message to a second network node through the transceiver, where the measurement request message is used to request the second network node to perform measurement on a target end according to a measurement requirement, and the target end includes a terminal and/or a cell; and
receiving a target measurement result of the measurement performed on the target end transmitted by the second network node in a case where the measurement requirement is able to meet.

In a fourth aspect, an embodiment of the present disclosure further provides an information communication apparatus, including:
a first transmitting unit, configured to transmit a measurement request message to a second network node, where the measurement request message is used to request the second network node to perform measurement on a target end according to a measurement requirement, and the target end includes a terminal and/or a cell; and
a first receiving unit, configured to receive a target measurement result of the measurement performed on the target end transmitted by the second network node in a case where the measurement requirement is able to meet.

In a fifth aspect, an embodiment of the present disclosure further provides a network node. The network node is a second network node, and includes a memory, a transceiver and a processor; the memory is configured to store program instructions; the transceiver is configured to transmit and receive data under the control of the processor; and the processor is configured to read the program instructions in the memory to perform the following operations:
receiving a measurement request message transmitted by a first network node through the transceiver, where the measurement request message is used to request the second network node to perform measurement on a target end according to a measurement requirement, and the target end includes a terminal and/or a cell;
performing measurement on the target end according to the measurement requirement to obtain a target measurement result in a case where the measurement requirement is able to meet; and
transmitting the target measurement result to the first network node through the transceiver.

In a sixth aspect, an embodiment of the present disclosure further provides an information communication apparatus, including:
a second receiving unit, configured to receive a measurement request message transmitted by a first network node, where the measurement request message is used to request the second network node to perform measurement on a target end according to a measurement requirement, and the target end includes a terminal and/or a cell;
a measurement unit, configured to perform the measurement on the target end according to the measurement requirement to obtain a target measurement result in a case where the measurement requirement is able to meet; and
a second transmitting unit, configured to transmit the target measurement result to the first network node.

In a seventh aspect, an embodiment of the present disclosure further provides a computer-readable storage medium, on which a computer program is stored. When the computer program is executed by a processor, steps of the information communication method described in the above first aspect are implemented, or steps of the information communication method described in the above second aspect are implemented.

The above technical solution of the present disclosure has at least the following beneficial effects.

In the above technical solution according to the embodiments of the present disclosure, a measurement request message is first transmitted to a second network node, where the measurement request message is used to request the second network node to perform measurement on a target end according to a measurement requirement, and the target end includes a terminal and/or a cell; and a target measurement result of the measurement performed on the target end transmitted by the second network node is received, in a case where the second network node can meet the measurement requirement. In this way, the demand may be met that the first network node can collect data (i.e., the measurement result about performing the measurement on the target end) fed back by the second network node. That is, information collection and feedback between network nodes are achieved, so that the first network node that uses the AI technology to make a decision can effectively correct and optimize a prediction result.

### BRIEF DESCRIPTION OF THE DRAWINGS

FIG. 1 is a schematic diagram of a basic functional architecture of AI in related technologies;
FIG. 2 is a first schematic flow chart of an information communication method according to an embodiment of the present disclosure;
FIG. 3 is a second schematic flow chart of an information communication method according to an embodiment of the present disclosure;
FIG. 4 is a third schematic flow chart of an information communication method according to an embodiment of the present disclosure;
FIG. 5 is a structural block diagram of a first network node according to an embodiment of the present disclosure;
FIG. 6 is a schematic module diagram of an information communication apparatus according to an embodiment of the present disclosure;
FIG. 7 is a structural block diagram of a second network node according to an embodiment of the present disclosure; and
FIG. 8 is a schematic module diagram of an information communication apparatus according to an embodiment of the present disclosure.

### DETAILED DESCRIPTION

The term "and/or" in embodiments of the present disclosure describes the association relationship of associated objects and indicates that there may be three types of relationships. For example, A and/or B may represent three situations including: A alone, both A and B, and B alone. The character "/" generally indicates that the associated objects before and after the character are in an "or" relationship.

The term "multiple" used in the embodiments of the present application refers to two or more, and other quantifiers are similar thereto.

In the following, technical solutions in the embodiments of the present application will be described in a clear and thorough manner with reference to the drawings in the embodiments of the present application. Apparently, the described embodiments are merely a part of, rather than all of, the embodiments of the present application. Based on the embodiments of the present application, a person skilled in the art may, without creative effort, obtain other embodiments, all of which shall fall within the protection scope of the present application.

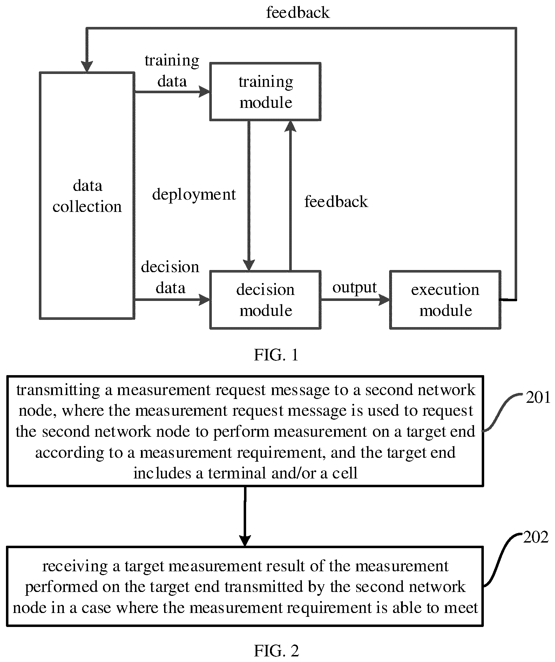

Before describing the embodiments of this application, relevant technical points will be first described:
In the 3rd generation partnership project (3rd Generation Partnership Project, 3GPP) R17 version, applying AI to 5G was studied. The basic functional architecture of AI is shown in FIG. 1.

A training module and a decision module of AI may be deployed on a base station. After making a decision and executing it, the base station may collect feedback data to correct the training module and the decision module. The existing AI application scenarios discussed by 3GPP include energy conservation, load balancing and mobility optimization.

AI is applied to energy conservation. By determining the load and the trend between or among cells, users may be migrated between cells, some resources such as cells and channels are released, and some resources are shut down, so as to reduce energy consumption. When it is predicted that the load is to increase, some devices and channels may be turned on in time, so as to ensure network indicators.

AI is applied to load balancing. By coordinating the load between cells, for example, switching some users to another cell, network congestion is avoided, and network performance indicators are improved.

AI is applied to mobility optimization. AI is used to predict user trajectory, select an appropriate target cell and access a resource, so as to improve the success rate of handover and the user experience.

The existing resource status reporting initiation (Resource Status Reporting Initiation) procedure includes that a network node requests other network node(s) to report load measurement result(s). A network node transmits a resource status request (RESOURCE STATUS REQUEST) message to another network node to request starting, stopping or adding a measurement task. The message includes a target cell or beam to be measured, and slices or objects to be measured may include a utilization rate of physical resource block (Physical Resource Block, PRB), transmission network resource available capacity, composite available resources, slice available capacity, the number of activated users, and the number of users connected through radio resource control (Radio Resource Control, RRC). After receiving the request message, the other network node may reply with a resource status response (RESOURCE STATUS RESPONSE) message if the other network node is capable of performing the requested measurement task; the other network node may reply with a resource status failure (RESOURCE STATUS FAILURE) message if there are measurement task(s) that cannot be satisfied.

After the Resource Status Reporting Initiation procedure is initiated successfully, other network node(s) will trigger a resource status reporting (Resource Status Reporting) procedure to report measurement result(s), specifically reporting PRB utilization rate, transmission network resource available capacity, composite available resources, slice available capacity, the number of activated users, and the number of users connected through RRC. If a reporting period is transmitted during the Resource Status Reporting Initiation procedure, a resource status update (RESOURCE STATUS UPDATE) message may be transmitted periodically to report a measurement result; or otherwise, the RESOURCE STATUS UPDATE message may be transmitted once.

It may be seen from the basic functional architecture of AI that after making a decision and executing it, the base station will collect feedback data to correct the training module and the decision module, and the collected data may belong to the current network node, or may belong to other network node(s). However, functions of the existing Resource Status Reporting Initiation procedure and Resource Status Reporting procedure are limited, and the requirement of collecting feedback data from other network nodes by AI cannot be met. For example, it is unable to meet the requirement of collecting a measurement quantity of a designated terminal, it cannot achieve that a measurement quantity and feedback are collected within a specific time period between network nodes, or more measurement quantities (such as cell throughput, delay, call drop and other KPI indicators) cannot be collected.

In order to solve the above technical problems, embodiments of the present application provide an information communication method and apparatus, and a network node. The method and the apparatus are based on the same inventive concept. Since principles of the method and the apparatus for solving the problem are similar, reference may be made to each other for implementations of the apparatus and the method, and repetitions of them will not be described again.

As shown in FIG. 2, FIG. 2 is a schematic flow chart of an information communication method provided by an embodiment of the present disclosure. The method is applied to, or executed by a first network node. For example, the first network node is a base station. The method may specifically include the following steps.

Step 201: transmitting a measurement request message to a second network node, where the measurement request message is used to request the second network node to perform measurement on a target end according to a measurement requirement, and the target end includes a terminal and/or a cell.

When an AI model deployed on the first network node makes a decision related to the second network node, a measurement request message is transmitted to the second network node.

It should be noted that the decision made by the AI model of the first network node and related to the second network node includes, but is not limited to: a decision to switch the terminal from the first network node to the second network node (the terminal here is a designated terminal, for example, a terminal located at a coverage edge of the first network node, or a terminal having a poor signal quality), a decision to establish a dual connection for the terminal at the first network node and select a candidate secondary node (where the candidate secondary node includes the second network node), a decision to switch terminals from the first network node to the second network node in batches, and a decision to establish dual connections for terminals in batches at the first network node and select candidate secondary nodes (where the candidate secondary nodes include the second network node).

The measurement requirement includes, but is not limited to: a measurement quantity, measurement timing, and feedback manner of the measurement result for indicating the second network node to perform measurement on the target end.

In an embodiment of the present disclosure, after step 201, the method may further include:
receiving a measurement response message transmitted by the second network node based on the measurement request message, where the measurement response message is used to indicate whether the second network node is able to meet the measurement requirement.

In a case where the measurement response message indicates that the first network node is able to meet the measurement requirement, the measurement response message is a measurement success response message; in a case where the measurement response message indicates that the first network node is unable to meet the measurement requirement, the measurement response message is a measurement failure response message.

That is to say, in a case where the second network node determines that the measurement requirement is able to meet based on the measurement request message, the second network node will return a measurement success response message to the first network node; in a case where the second network node determines that the measurement requirement is unable to meet based on the measurement request message, the second network node will return a measurement failure response message.

Step 202: receiving a target measurement result of the measurement performed on the target end transmitted by the second network node in a case where the measurement requirement is able to meet.

In a case where the second network node is able to meet the measurement requirement, the second network node performs measurement on the target end according to the measurement requirement, and then returns the obtained measurement result to the first network node. That is, step 202 is performed by the first network node.

It should be noted that in a case where the second network node is unable to meet the measurement requirement, the first network node performs the above step 201, and the process ends; or the first network node performs the above step 201, and the process ends after it receives a measurement response message transmitted by the second network node based on the measurement request message. The measurement response message is a measurement failure response message, for indicating that the second network node is unable to meet the measurement requirement, and step 202 does not exist.

In the information communication method according to the embodiment of the present disclosure, a measurement request message is first transmitted to a second network node, where the measurement request message is used to request the second network node to perform measurement on a target end according to a measurement requirement, and the target end includes a terminal and/or a cell; and a target measurement result of the measurement performed on the target end transmitted by the second network node is received, in a case where the measurement requirement is able to meet. In this way, the demand may be met that the first network node can collect data fed back by the second network node (i.e., the measurement result of the measurement on the target end). That is, information collection and feedback between network nodes are achieved, so that the first network node that uses the AI technology to make a decision can effectively correct and optimize a prediction result.

Optionally, the measurement request message includes one or more of the following information:
identification information of the target end;
time information related to the measurement on the target end; or
a measurement quantity of the target end.

Specifically, in a case where the target end is a terminal, the measurement request message includes one or more of the following information:
identification information of the terminal;
time information related to the measurement on the terminal; or
a measurement quantity of the terminal.

In a case where the target end is a cell, the measurement request message includes one or more of the following information:
identification information of the cell;
time information related to the measurement on the cell; or
a measurement quantity of the cell.

In a case where the target end is a terminal and a cell, the measurement request message includes one or more of the following information:
identification information of the terminal;
identification information of the cell;
time information related to terminal measurement;
time information related to cell measurement;
a measurement quantity of the terminal; or
a measurement quantity of the cell.

Optionally, the time information related to the measurement on the target end includes at least one of the following:
a starting time when the performing measurement on the target end starts;
an ending time when the performing measurement on the target end ends;
a period for transmitting the measurement result obtained by performing measurement on the target end to the first network node; or
a frequency for transmitting the measurement result obtained by performing measurement on the target end to the first network node.

It should be noted that if the first network node using the AI technology needs to collect measurement quantities within a period after AI decision and execution, so as to evaluate the effect of AI execution, for example, evaluating whether the target end on the second network node has achieved an expected performance and metrics for a specific period, it requires that the second network node side performs measurement on the target end in accordance with the time requirement (sent by the first network node side).

The time requirement may be the starting time and ending time of performing measurement on the target end. Of course, the measurement result obtained by performing measurement on the target end by the second network node side may also be transmitted to the first network node according to a preset period or frequency (sent by the first network node side).

Optionally, the measurement quantity of the target end includes at least one of the following:
a reporting parameter of terminal measurement;
a statistics quantity of terminal measurement at layer 2;
a stable residence time of the terminal;
quality of experience (QoE) visible to the second network node;
minimization of drive tests;
a statistics quantity of cell measurement at layer 2;
an energy efficiency of the cell; or
a key performance indicator (KPI) of the cell.

Specifically, in a case where the target end is a terminal, the measurement quantity of the target end includes at least one of the following:
a reporting parameter of terminal measurement;
a statistics quantity of terminal measurement at layer 2;
a stable residence time of the terminal;
quality of experience (QoE) visible to the second network node; or
minimization of drive tests (Minimization of Drive Tests, MDT).

The reporting parameter of terminal measurement may specifically be reference signal received power (Reference Signal Received Power, RSRP), reference signal received power (Reference Signal Received Power, RSRQ), signal to interference plus noise ratio (Signal to Interference plus Noise Ratio, SINR) of a signal of a serving cell and a neighboring cell, or the like.

The statistics quantity of terminal measurement at layer 2 (L2) is statistics of data transmitted by the base station side to the terminal, or interaction data between the base station side and the terminal, and may include a variety of statistics.

The statistics quantity of terminal measurement at L2 may be counted separately for uplink and downlink, which includes but not limited to the following:
average delay of uplink packets;
average delay of downlink packets;
uplink packet loss rate;
downlink packet loss rate;
total data throughput; or
distributed data throughput.

The statistical method of the statistics quantity at L2 will be explained below by taking an example of downlink data throughput and uplink packet loss rate.

### a. Downlink data throughput

It is used to count a downlink data volume per unit time by the base station side (such as evolved Node B (evolutionary Node B, eNB), 5G node (generation Node B, gNB), gNB centralized unit (gNB Centralized Unit, gNB-CU), gNB-CU user panel (gNB-CU User Plane, gNB-CU-UP)).

Specifically, statistics may be performed on all data flows or all data packets of data bursts (data burst) within a time period T, for example, for data bursts that meet requirements of a certain data volume or a transmission time length.

The statistical method may include: dividing the sum of data volumes of all data packets that meet the requirement (for example, receipt of an acknowledgment (Acknowledgment, ACK) from user equipment (User Equipment, UE)) by the total time length used to transmit these data packets.

The statistics may be for each UE, each QoS class identifier (QoS Class Identifier, QCI), each 5G QoS identifier (5G QoS Identifier, 5QI), each data radio bearer (Data Radio Bearer, DRB), or a combination of the above three items.

### b. Uplink packet loss rate

It is used to count uplink packet data convergence protocol (Packet Data Convergence Protocol, PDCP) packets that have not been successfully received at the base station side (eNB, gNB, gNB-CU, gNB-CU-UP, etc.), and it includes uplink packet loss rates at all locations such as air interface, F1-U interface, and a base station (eNB, gNB, gNB-CU, gNB-CU-UP).

The statistics may be collected only on data packets that enter service data adaption protocol (Service Data Adaption Protocol, SDAP) or PDCP entity.

The statistics may be performed for each UE, each QCI, each 5QI, each DRB, or a combination of the above three items.

The statistics may also be performed on data packets within a time period T, or on all data packets in a data flow or in a data burst (data burst), for example, performing statistics on data bursts that meet a certain requirement of a data volume or a transmission time length.

Specifically, the statistical method may include: dividing the number of sequence numbers of lost uplink PDCP packets by the number of sequence numbers of all PDCP packets to obtain a percentage.

In a case where the target end is a cell, the measurement quantity of the target end includes at least one of the following:
a statistics quantity of cell measurement at layer 2;
energy efficiency of the cell; or
key performance indicator (Key Performance Indicator, KPI) of the cell.

The statistics quantity of cell measurement at cell layer 2 (L2) may be counted separately for uplink and downlink, which includes but not limited to the following contents:
the number of activated (connected) terminals;
a usage situation of PRB;
average uplink packet delay;
average downlink packet delay;
uplink packet loss rate;
downlink packet loss rate;
total data throughput; or
distributed data throughput.

The statistical method of the statistics quantity at L2 will be explained below by taking an example of a usage situation of total uplink PRBs, downlink data throughput, and uplink packet loss rate.

### 1) Usage situation of total uplink PRBs

It is used to count and report the total occupancy rate of PRBs on the base station side (eNB, gNB, gNB-DU, etc.), and a statistical result may be used to monitor the network load situation.

The statistical method may include: dividing the number of PRBs that has been used for uplink data transmission within a time period by the total number of all uplink PRBs (available for uplink data transmission), and converting it into a percentage.

### 2) Downlink data throughput

It is used to count a downlink data volume per unit time at the base station side (such as eNB, gNB, gNB-CU, gNB-CU-UP, etc.).

Specifically, statistics may be performed on all data flows or all data packets of data bursts (data burst) within a time period T, for example, for data bursts that meet requirements of a certain data volume or a transmission time length.

The statistical method may include: dividing the sum of data volumes of all data packets that meet the requirement (such as receipt of acknowledgment (ACK) from user equipment (UE)) by the total time length used to transmit these data packets.

### 3) Uplink packet loss rate

It is used to count uplink PDCP packets that have not been successfully received at the base station side (eNB, gNB, gNB-CU, gNB-CU-UP, etc.), and it includes uplink packet loss rates at all locations such as air interface, F1-U interface, and a base station (eNB, gNB, gNB-CU, gNB-CU-UP).

The statistics may also be performed on data packets within a time period T, or on all data packets in a data flow or in a data burst (data burst), for example, statistics on data bursts that meet a certain requirement of a data volume or a transmission time length.

Specifically, the statistical method may include: dividing the number of sequence numbers of lost uplink PDCP packets by the number of sequence numbers of all PDCP packets to obtain a percentage.

It should be noted that the energy consumption efficiency of the cell is the energy consumed by transmitting a unit of data volume, and the statistical method may include: dividing the energy consumed by the cell per unit time by the total of data volumes of all data packets that meet the requirement (for example, when receiving ACK from UE).

The KPI of the cell includes, but not limited to: a success rate of cell access, a call drop rate, a success rate of handover, and a reconstruction rate. Different from the cell KPI statistics triggered by a conventional management station, this indicator needs to be measured and reported according to the measurement requirement of measurement collection, such as time requirement, the starting time and the ending time of measurement; a period and a frequency for transmitting the measurement result obtained after performing measurement to the first network node.

In an optional implementation, the method according to an embodiment of the present disclosure may further include: step S11, obtaining first decision information of the first network node, where the first decision information is used to make a decision to switch the terminal from the first network node to the second network node.

Correspondingly, step 201 may specifically include: step 2011a, transmitting the measurement request message to the second network node according to the first decision information, where the measurement request message is used to request the second network node to perform measurement on the terminal according to the measurement requirement.

The application scenario corresponding to the implementation is that the first network node makes a decision to switch the terminal from the first network node to the second network node by using the AI technology. In this case, the measurement object, i.e., the target end, is the terminal.

Based on the implementation, further, the transmitting the measurement request message to the second network node may specifically include: transmitting the measurement request message to the second network node through a handover request message.

This step may be understood as: transmitting the measurement request message to the second network node through a handover request message according to the first decision information. That is, the measurement request message is carried in the handover request message.

After the first network node makes a decision to switch the terminal from the first network node to the second network node by using the AI technology, the first network node transmits a handover request message to the second network node, where the handover request message carries the measurement request message used for requesting the second network node to perform measurement on the terminal according to the measurement requirement.

Correspondingly, the receiving the measurement response message transmitted by the second network node based on the measurement request message may specifically include:
a. receiving the measurement response message transmitted by the second network node through a handover request response message.

That is, the measurement response message is carried in the handover request response message.

The measurement request message is sent by carrying it in the handover request message, which can save network resources.

Of course, the measurement request message may not be carried in the handover request message and may be transmitted independently; a corresponding measurement response message may be transmitted independently by the second network node.

In another optional implementation, the method according to an embodiment of the present disclosure may further include: step S21, obtaining second decision information of the first network node, where the second decision information is used to make a decision to establish a dual connection for the terminal at the first network node and select a candidate secondary node.

Correspondingly, step 201 may specifically include: step 2011b, transmitting the measurement request message to the second network node according to the second decision information, where the measurement request message is used to request the second network node to perform measurement on the terminal according to the measurement requirement.

The application scenario corresponding to the implementation is that the first network node makes a decision to establish a dual connection for the terminal at the first network node and select a candidate secondary node by using the AI technology. In this case, the measurement object, namely the target end, is the terminal.

The candidate secondary node includes the second network node.

Based on the implementation, further, the transmitting the measurement request message to the second network node may specifically include: transmitting the measurement request message to the second network node through a secondary node addition request message.

This step should be understood as: transmitting a measurement request message to the second network node through the secondary node addition request message according to the second decision information. That is, the measurement request message is carried in the secondary node addition request message.

After the first network node uses the AI technology to make a decision that the first network node establishes a dual connection for the terminal and selects a candidate secondary node, the first network node transmits a secondary node addition request message to the second network node. The secondary node addition request message carries the measurement request message used for requesting the second network node to perform measurement on the terminal according to the measurement requirement.

Correspondingly, the receiving the measurement response message transmitted by the second network node based on the measurement request message may specifically include:
b. receiving the measurement response message transmitted by the second network node through a secondary node addition request response message.

That is, the measurement response message is carried in the secondary node addition request response message.

The measurement request message is sent by carrying it in the secondary node addition request message, which can save network resources.

Of course, the measurement request message may not be carried in the secondary node addition request message and may be transmitted independently; a corresponding measurement response message may be transmitted independently by the second network node.

In another optional implementation, the method according to an embodiment of the present disclosure may further include: step S21, obtaining third decision information of the first network node, where the third decision information is used to make a decision to switch terminals from the first network node to the second network node in batches, or to make a decision to establish dual connections for terminals in batches at the first network node and select candidate secondary nodes,

Correspondingly, step 201 may specifically include: step 2011c, transmitting the measurement request message to the second network node according to the third decision information, where the measurement request message is used to request the second network node to perform measurement on the terminal and/or the cell according to the measurement requirement.

The application scenario corresponding to the implementation is that: in order to coordinate the load between cells and balance the load between cells, the first network node uses the AI technology to make a decision to switch terminals from the first network node to the second network node in batches, or the first network node uses the AI technology to make a decision to establish dual connections and select candidate secondary nodes for terminals in batches.

That is to say, for the purpose of load balancing among cells, the first network node uses the AI technology to make a decision to migrate a group of terminals (users) from the first network node to the second network node. In order to evaluate the effect of load balancing subsequently, it is necessary not only to ensure the service quality of the migrated terminals, but also to ensure that the service quality of original cells in the second network node does not significantly deteriorate due to admission of the migrated terminals. Thus, the measurement object in this application scenario, namely the target end, is a terminal and/or a cell. That is to say, the first network node requests the second network node to collect measurement results that may include both a measurement result in a level of terminal and a measurement result in a level of cell.

It should be noted that if the first network node requests the second network node to perform measurement on the terminal and the cell according to the measurement requirement, the measurement request message may include a first measurement request message and a second measurement request message, and the first measurement request message is used to request the second network node to perform measurement on the terminal according to the measurement requirement; the second measurement request message is used to request the second network node to perform cell measurement according to the measurement requirement. That is to say, the measurement request message is transmitted in two messages, that is, the first network node transmits the first measurement request message and the second measurement request message, respectively, and correspondingly, the second network node responds to the two measurement request messages, respectively. Of course, one measurement request message may also be used to request the second network node to perform measurement on the terminal and the cell measurement according to the requirement, that is, one measurement request message includes a terminal-level measurement request and a cell-level measurement request.

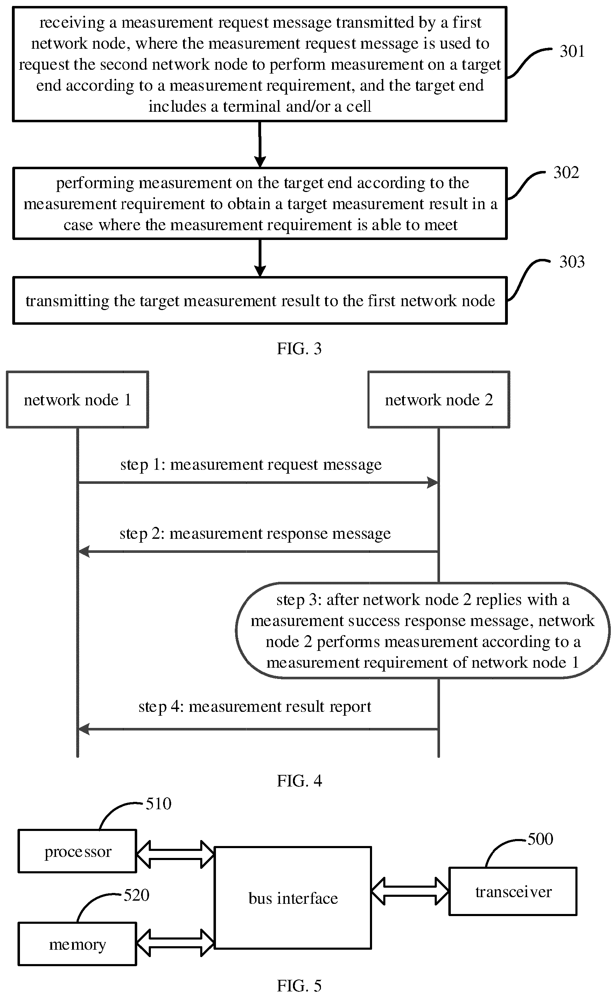

Reference is made to FIG. 3, which is a schematic flow chart of an information communication method provided by an embodiment of the present disclosure. The method is applied to a second network node, that is, executed by the second network node. For example, the second network node is a base station. The method may specifically include the following steps.

Step 301: receiving a measurement request message transmitted by a first network node, where the measurement request message is used to request the second network node to perform measurement on a target end according to a measurement requirement, and the target end includes a terminal and/or a cell.

The measurement requirement includes, but is not limited to: a measurement quantity, measurement timing, and feedback manner of the measurement result for indicating the second network node to perform measurement on the target end.

After step 301, the method according to an embodiment of the present disclosure may further include: transmitting a measurement response message to the first network node based on the measurement request message, where the measurement response message is used to indicate whether the second network node is able to meet the measurement requirement.

The second network node determines whether it is able to meet the measurement requirement based on the measurement request message, specifically, based on the measurement requirement in the measurement request message, and then transmits a corresponding measurement response message to the first network node.

Specifically, when determining that the measurement requirement can be met, the second network node transmits a measurement success response message to the first network node; when determining that the measurement requirement can not be met, the second network node transmits a measurement failure response message to the first network node.

Step 302: performing measurement on the target end according to the measurement requirement to obtain a target measurement result in a case where the measurement requirement is able to meet.

In the case where the second network node can meet the measurement requirement, the second network node performs measurement on the target end according to the measurement requirement (which may be understood as the content of the measurement request message), for example, indicating a measurement object, measurement timing, a measurement quantity, etc., to obtain the target measurement result.

It should be noted that, in a case where the second network node can not meet the measurement requirement, the second network node only performs step 301 and ends the process; or the second network node may perform the above step 301 and may end the process after transmitting a measurement response message to the first network node based on the measurement request message, where the measurement response message is a measurement failure response message. Subsequent steps, namely step 302 and step 303, are no longer performed.

Step 303: transmitting the target measurement result to the first network node.

Optionally, the target measurement result may be transmitted to the first network node according to the measurement requirement, such as, a feedback manner of the measurement result. Specifically, the target measurement result may be transmitted to the first network node according to a preset period or frequency.

In the information communication method according to the embodiments of the present disclosure, a measurement request message transmitted by a first network node is first received, where the measurement request message is used to request the second network node to perform measurement on a target end according to a measurement requirement, and the target end includes a terminal and/or a cell; measurement is performed on the target end according to the measurement requirement to obtain a target measurement result in a case where the measurement requirement is able to meet; and the target measurement result is finally transmitted to the first network node. In this way, the target measurement result returned by the second network node satisfies the requirement for a first network node to collect feedback data, that is, to realize information collection and feedback between network nodes, so that the first network node that uses the AI technology to make a decision can effectively correct and optimize the prediction result.

Optionally, the measurement request message includes one or more of the following information:
identification information of the target end;
time information related to the measurement on the target end; or
a measurement quantity of the target end.

Optionally, the time information related to the measurement on the target end includes at least one of the following:
a starting time when the performing measurement on the target end starts;
an ending time when the performing measurement on the target end ends;
a period for transmitting the measurement result obtained by performing measurement on the target end to the first network node; or
a frequency for transmitting the measurement result obtained by performing measurement on the target end to the first network node.

Optionally, the measurement quantity of the target end includes at least one of the following:
a reporting parameter of terminal measurement;
a statistics quantity of terminal measurement at layer 2;
a stable residence time of the terminal;
quality of experience (QoE) visible to the second network node;
minimization of drive tests;
a statistics quantity of cell measurement at layer 2;
an energy efficiency of the cell; or
a key performance indicator (KPI) of the cell.

The description of the above measurement request message, the time information related to the measurement on the target end, and each of the measurement quantities of the target end are detailed in the embodiments shown in FIG. 2, and will not be described again here.

Optionally, the target measurement result includes at least one of the following:
a measurement result of a reporting parameter of terminal measurement;
a measurement result of a statistics quantity of terminal measurement at layer 2;
a measurement result of a stable residence time of the terminal;
a measurement result of quality of experience (QoE) visible to the second network node;
a measurement result of minimization of drive tests;
a measurement result of a statistics quantity of cell measurement at layer 2;
a measurement result of an energy efficiency of the cell; or
a measurement result of a KPI of the cell.

In an optional implementation, step 301 may include: step 3011a, receiving the measurement request message transmitted by the first network node through a handover request message, where the measurement request message is used to request the second network node to perform measurement on the terminal according to the measurement requirement.

Correspondingly, the transmitting the measurement response message to the first network node based on the measurement request message may include:
A. transmitting a measurement response message to the first network node through a handover request response message.

The application scenario corresponding to this implementation is that the first network node makes a decision to switch the terminal from the first network node to the second network node by using the AI technology, the first network node transmits a handover request message carrying the measurement request message to the second network node; and correspondingly, the second network node side needs to perform this step.

In an optional implementation, step 301 may include: step 3011b, receiving the measurement request message transmitted by the first network node through a secondary node addition request message, where the measurement request message is used to request the second network node to perform measurement on the terminal according to the measurement requirement.

Correspondingly, the transmitting the measurement response message to the first network node based on the measurement request message may include:
B. transmitting a measurement response message to the first network node through a secondary node addition request response message.

This implementation corresponds to an application scenario that the first network node makes a decision to establish a dual connection for the terminal at the first network node and select a candidate secondary node by using the AI technology (the candidate secondary node includes the second network node), the first network node transmits a secondary node addition request message carrying the measurement request message to the second network node, and correspondingly, the second network node side needs to perform this step.

It should be noted that in a case where the second network node receives a measurement request message from the first network node, and the measurement request message is used to request the second network node to perform measurement on the terminal and/or the cell according to the measurement requirement, the corresponding application scenario may be that: in order to coordinate the load between cells and balance the load between cells, the first network node uses the AI technology to make a decision to switch terminals from the first network node to the second network node in batches, or the first network node uses the AI technology to make a decision to establish dual connections and select candidate secondary nodes for terminals in batches, and the first network node transmits a measurement request message to the second network node. Correspondingly, the second network node receives the measurement request message transmitted by the first network node.

The following describes the implementation process of the information communication method of the present disclosure from the perspective of interaction between network nodes.

Referring to FIG. 4, two network nodes for information interaction are network node 1 and network node 2. The implementation steps of the specific method are as follows.

Step 1: the network node 1 transmits a measurement request message to the network node 2. The measurement request message includes a requirement of requesting for network node 2 to perform measurement.

The network node 2 and the network node 1 are adjacent network nodes.

Step 2: the network node 2 transmits a measurement response message to the network node 1.

Specifically, when determining that the measurement requirement can be met based on the measurement request message, the network node 2 returns a measurement success response message to the network node 1; when determining that the measurement requirement cannot be met based on the measurement request message, the network node 2 returns a measurement failure response message to the network node 1.

Step 3: after the network node 2 replies with a measurement success response message, the network node 2 performs measurement according to a measurement requirement of the network node 1.

Step 4: the network node 2 transmits a measurement result report to the network node 1.

It should be noted that if the network node 2 is requested to perform cell measurement according to the measurement requirement, a message in the existing Resource Status Reporting Initiation procedure and Resource Status Reporting procedure may be enhanced for steps 1, 2 and 4, or a new procedure message may be added.

Referring to FIG. 4, a specific implementation process of the information communication method of the present disclosure will be explained below through three embodiments, based on different measurement objects that need to be measured, from the perspective of interaction between network nodes.

Embodiment 1: the network node 1 requests the network node 2 to feed back a measurement result for terminal measurement.

In this scenario, the measurement request message in step 1 includes index information of a terminal (i.e., identification information of the terminal). The index information may include an index of one terminal, or may include indexes of multiple terminals. That is, the network node 1 instructs the network node 2 to collect measurements of designated terminal(s).

The measurement request message includes one or more of the following information:
identification information of the terminal;
time information related to the measurement on the terminal; or
a measurement quantity of the terminal.

Specifically, the identification information of the terminal may be index information of the terminal.

The time information related to the measurement on the terminal includes at least one of the following:
a starting time when the performing terminal measurement starts;
an ending time when the performing terminal measurement ends;
a period for transmitting the measurement result obtained by performing terminal measurement to the network node 1; or
a frequency for transmitting the measurement result obtained by performing terminal measurement to the network node 1.

The measurement quantity of the terminal includes at least one of the following:
a reporting parameter of terminal measurement;
a statistics quantity of terminal measurement at layer 2;
a stable residence time of the terminal;
QoE visible to the second network node; or
MDT.

If the network node 2 replies to the network node 1 with a measurement success response message in step 2, the network node 2 will collect the above measurement quantities according to the measurement requirement, and in step 4, transmits an index of a specified terminal and a corresponding measurement result to the network node 1 according to the measurement requirement (such as in a time and a period as required).

The network node 1 may use feedback data (i.e., the measurement result) collected from the network node 2 to evaluate whether a training module and a decision module of AI corresponding to the specified terminal need to be adjusted and optimized.

Through the above messages and processes, the network node 1 can evaluate the effect of AI and make corrections. Specifically, it may be whether the terminal reaches the expected performance and indicator within a specific time period on the network node 2 after operations such as terminal handover and secondary node addition.

Embodiment 2: the network node 1 requests the network node 2 to feed back a measurement result for cell measurement.

In this scenario, the measurement request message in step 1 includes index information of a cell (i.e., identification information of the cell). The index information may include an index of one cell, or indexes of multiple cells. That is, the network node 1 instructs the network node 2 to collect measurements of designated cell(s).

The measurement request message includes one or more of the following information:
identification information of the cell;
time information related to the measurement on the cell; or
a measurement quantity of the cell.

The time information related to the measurement of the cell includes at least one of the following:
a starting time when the performing cell measurement starts;
an ending time when the performing cell measurement ends;
a period for transmitting the measurement result obtained by performing cell measurement to the network node 1; or
a frequency for transmitting the measurement result obtained by performing cell measurement to the network node 1.

The measurement quantity of the cell includes at least one of the following:
a statistics quantity of cell measurement at layer 2;
an energy efficiency of the cell; or
KPI of the cell.

If the network node 2 replies to the network node 1 with a measurement success response message in step 2, the network node 2 will collect the above measurement quantities according to the measurement requirement, and in step 4, transmits an index of a designated cell and a corresponding measurement result to the network node 1 according to the measurement requirement (such as in a time and a period as required).

The network node 1 may use feedback data (i.e., the measurement result) collected from the network node 2 to evaluate whether a training module and a decision module of AI corresponding to the designated cell need to be adjusted and optimized.

Through the above messages and processes, the network node 1 can evaluate the effect of AI and make corrections. A specific scenario is that after the network node triggers batch switching of terminals to the network node 2, and batch adding secondary nodes for some terminals on the network node 2, whether the performance and indicator of the cell on the network node 2 meet the requirements within a specific time period is determined. If the above operations cause the indicator of the network node 2 to drop significantly, the network node 1 needs to correct an AI model.

Embodiment 3: the network node 1 requests the network node 2 to simultaneously feed back measurement results for terminal measurement and cell measurement.

The network node 1 uses the AI technology to migrate a group of users from the network node 1 to the network node 2 in a certain application scenario, such as, for load balancing among cells. In order to evaluate the effect of load balancing, it is not only necessary to ensure the service quality of the migrated users, but also necessary to ensure that the service quality of the original cells in the network node 2 does not significantly deteriorate due to admission of the migrated users. Therefore, the measurement result that the first network node requests the second network node to collect may include both a terminal-level measurement result and a cell-level measurement result, that is, embodiments 1 and 2 may be performed at the same time.

In a specific implementation, one measurement request message in step 1 may include a terminal-level measurement request and a cell-level measurement request, or the terminal-level measurement request and the cell-level measurement request may be transmitted respectively. Messages in steps 2 and 4 are similar to the message in step 1, which will not be described again here.

As shown in FIG. 5, an embodiment of the present disclosure further provides a network node. The network node is a first network node, and includes: a memory 520, a transceiver 500 and a processor 510. The memory 520 is configured to store program instructions; the transceiver 500 is configured to transmit and receive data under the control of the processor 510; and the processor 510 is configured to read the program instructions in the memory 520 to perform the following operations:
transmitting a measurement request message to a second network node through the transceiver 500, where the measurement request message is used to request the second network node to perform measurement on a target end according to a measurement requirement, and the target end includes a terminal and/or a cell; and
receiving a target measurement result of the measurement performed on the target end transmitted by the second network node in a case where the measurement requirement is able to meet.

In FIG. 5, the bus architecture may include any number of interconnected buses and bridges. Specifically, various circuits of one or more processors represented by the processor 510 and a memory represented by the memory 520 are linked together. The bus architecture may also link various other circuits such as peripheral devices, voltage regulators, power management circuits, etc., which are well-known in the art, and therefore, no further descriptions are provided herein. The bus interface provides an interface. The transceiver 500 may be a plurality of elements, that is, include a transmitter and a receiver, and provide a unit for communicating with various other devices on transmission media, which include a wireless channel, a wired channel, an optical cable, and other transmission media. The processor 510 is responsible for managing the bus architecture and general processing, and the memory 520 can store data used by the processor 510 when performing operations.

The processor 510 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

Optionally, the measurement request message includes one or more of the following information:
identification information of the target end;
time information related to the measurement on the target end; or
a measurement quantity of the target end.

Optionally, the time information related to the measurement on the target end includes at least one of the following:
a starting time when the performing measurement on the target end starts;
an ending time when the performing measurement on the target end ends;
a transmission period during which the measurement result obtained by performing measurement on the target end is transmitted to the first network node; or
a transmission frequency at which the measurement result obtained by performing measurement on the target end is transmitted to the first network node.

Optionally, the measurement quantity of the target end includes at least one of the following:
a reporting parameter of terminal measurement;
a statistics quantity of terminal measurement at layer 2;
a stable residence time of the terminal;
quality of experience (QoE) visible to the second network node;
minimization of drive tests;
a statistics quantity of cell measurement at layer 2;
an energy efficiency of the cell; or
a key performance indicator (KPI) of the cell.

Optionally, the processor 510 is further configured to: obtain first decision information of the first network node, where the first decision information is used to make a decision to switch the terminal from the first network node to the second network node.

Correspondingly, the transceiver 500 is further configured to: transmit the measurement request message to the second network node according to the first decision information, where the measurement request message is used to request the second network node to perform measurement on the terminal according to the measurement requirement.

Optionally, the transceiver 500 is further configured to: transmit the measurement request message to the second network node through a handover request message.

Optionally, the processor 510 is further configured to: obtain second decision information of the first network node, where the second decision information is used to make a decision to establish a dual connection for the terminal at the first network node and select a candidate secondary node.

Correspondingly, the transceiver 500 is further configured to: transmit the measurement request message to the second network node according to the second decision information, where the measurement request message is used to request the second network node to perform measurement on the terminal according to the measurement requirement.

Optionally, the transceiver 500 is further configured to: transmit the measurement request message to the second network node through a secondary node addition request message.

Optionally, the processor 510 is further configured to: obtain third decision information of the first network node, where the third decision information is used to make a decision to switch terminals from the first network node to the second network node in batches, or to make a decision to establish dual connections for terminals in batches at the first network node and select candidate secondary nodes.

Optionally, the transceiver 500 is further configured to: transmit the measurement request message to the second network node according to the third decision information, where the measurement request message is used to request the second network node to perform measurement on the terminal and/or the cell according to the measurement requirement.

The network node in the embodiment of the present disclosure first transmits a measurement request message to a second network node, where the measurement request message is used to request the second network node to perform measurement on a target end according to a measurement requirement, and the target end includes a terminal and/or a cell; and then receives a target measurement result of the measurement performed on the target end transmitted by the second network node in a case where the measurement requirement is able to meet. In this way, the demand may be met that the first network node can collect data fed back by the second network node (i.e., the measurement result of the measurement on the target end). That is, information collection and feedback between network nodes are achieved, so that the first network node that uses the AI technology to make a decision can effectively correct and optimize a prediction result.

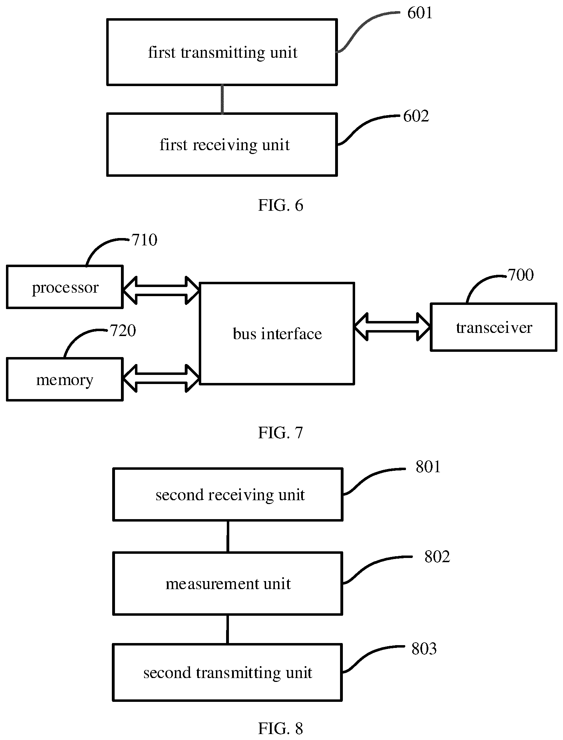

As shown in FIG. 6, an embodiment of the present disclosure further provides an information communication apparatus, which is applied to a first network node. The apparatus includes:
a first transmitting unit 601, configured to transmit a measurement request message to a second network node, where the measurement request message is used to request the second network node to perform measurement on a target end according to a measurement requirement, and the target end includes a terminal and/or a cell; and
a first receiving unit 602, configured to receive a target measurement result of the measurement performed on the target end transmitted by the second network node in a case where the measurement requirement is able to meet.

Optionally, the measurement request message includes one or more of the following information:
identification information of the target end;
time information related to the measurement on the target end; or
a measurement quantity of the target end.

Optionally, the time information related to the measurement on the target end includes at least one of the following:
a starting time when the performing measurement on the target end starts;
an ending time when the performing measurement on the target end ends;
a transmission period during which the measurement result obtained by performing measurement on the target end is transmitted to the first network node; or
a transmission frequency at which the measurement result obtained by performing measurement on the target end is transmitted to the first network node.

Optionally, the measurement quantity of the target end includes at least one of the following:
a reporting parameter of terminal measurement;
a statistics quantity of terminal measurement at layer 2;
a stable residence time of the terminal;
quality of experience (QoE) visible to the second network node;
minimization of drive tests;
a statistics quantity of cell measurement at layer 2;
an energy efficiency of the cell; or
a key performance indicator (KPI) of the cell.

Optionally, the apparatus according to the embodiment of the present disclosure further includes: a first obtaining unit, configured to obtain first decision information of the first network node, where the first decision information is used to make a decision to switch the terminal from the first network node to the second network node.

Correspondingly, the first transmitting unit 601 is specifically configured to: transmit the measurement request message to the second network node according to the first decision information, where the measurement request message is used to request the second network node to perform measurement on the terminal according to the measurement requirement.

Optionally, the first transmitting unit 601 is specifically configured to: transmit the measurement request message to the second network node through a handover request message.

Optionally, the apparatus according to the embodiment of the present disclosure further includes: a second acquisition unit, configured to obtain second decision information of the first network node, where the second decision information is used to make a decision to establish a dual connection for the terminal at the first network node and select a candidate secondary node.

Correspondingly, the first transmitting unit 601 is specifically configured to: transmit the measurement request message to the second network node according to the second decision information, where the measurement request message is used to request the second network node to perform measurement on the terminal according to the measurement requirement.

Optionally, the first transmitting unit 601 is specifically configured to: transmit the measurement request message to the second network node through a secondary node addition request message.

Optionally, the apparatus according to the embodiment of the present disclosure further includes: a third obtaining unit, configured to obtain third decision information of the first network node, where the third decision information is used to make a decision to switch terminals from the first network node to the second network node in batches, or to make a decision to establish dual connections for terminals in batches at the first network node and select candidate secondary nodes.

Correspondingly, the first transmitting unit 601 is specifically configured to: transmit the measurement request message to the second network node according to the third decision information, where the measurement request message is used to request the second network node to perform measurement on the terminal and/or the cell according to the measurement requirement.

The information communication apparatus according to the embodiment of the present disclosure transmits a measurement request message to a second network node, where the measurement request message is used to request the second network node to perform measurement on a target end according to a measurement requirement, and the target end includes a terminal and/or a cell; and then receives a target measurement result of the measurement performed on the target end transmitted by the second network node in a case where the measurement requirement is able to meet. In this way, the demand may be met that the first network node can collect data fed back by the second network node (i.e., the measurement result of the measurement on the target end). That is, information collection and feedback between network nodes are achieved, so that the first network node that uses the AI technology to make a decision can effectively correct and optimize a prediction result.

It should be noted that the division of units in the embodiments of the present application is illustrative, and is only a logical function division, and there may be another division manner in actual implementation. In addition, the functional units in various embodiments of the present application may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present application, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present application. The aforementioned storage media include: universal serial bus (USB) flash drive, removable hard disk, read-only memory (ROM), random access memory (RAM), magnetic disk, optical disc or other media that can store program codes.

It should be noted that the above apparatus provided in the embodiments of the present disclosure can implement all method steps implemented in the above method embodiments, and can achieve the same technical effects. Therefore, the description and the beneficial effect of this embedment that are the same as the method embodiments will not be introduced here in detail.

In some embodiments of the present disclosure, a processor-readable storage medium is further provided. The processor-readable storage medium stores program instructions, and the program instructions are configured to cause a processor to perform the following steps:
transmitting a measurement request message to a second network node, where the measurement request message is used to request the second network node to perform measurement on a target end according to a measurement requirement, and the target end includes a terminal and/or a cell; and
receiving a target measurement result of the measurement performed on the target end transmitted by the second network node in a case where the measurement requirement is able to meet.

The program, when executed by the processor, may realize all the implementations in the above method embodiment applied to the first network node side as shown in FIG. 2. To avoid duplication, details will not be described here.

As shown in FIG. 7, an embodiment of the present disclosure further provides a network node. The second network node includes: a memory 720, a transceiver 700 and a processor 710. The memory 720 is configured to store a computer program; the transceiver 700 is configured to transmit and receive data under the control of the processor 710; the processor 710 is configured to read the computer program in the memory 720 to perform the following operations:
receiving, through the transceiver, a measurement request message transmitted by a first network node, where the measurement request message is used to request the second network node to perform measurement on a target end according to a measurement requirement, and the target end includes a terminal and/or a cell;
performing measurement on the target end according to the measurement requirement to obtain a target measurement result in a case where the measurement requirement is able to meet; and
transmitting the target measurement result to the first network node through the transceiver 700.

In FIG. 7, the bus architecture may include any number of interconnected buses and bridges. Specifically, various circuits of one or more processors represented by the processor 710 and a memory represented by the memory 720 are linked together. The bus architecture may also link various other circuits such as peripheral devices, voltage regulators, power management circuits, etc., which are well-known in the art, and therefore, no further descriptions are provided herein. A bus interface provides an interface. The transceiver 700 may be a plurality of elements, that is, include a transmitter and a receiver, and provide a unit for communicating with various other devices on transmission media, which include a wireless channel, a wired channel, an optical cable, and other transmission media. The processor 710 is responsible for managing the bus architecture and general processing, and the memory 720 can store data used by the processor 710 when performing operations.

The processor 710 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

Optionally, the measurement request message includes one or more of the following information:
identification information of the target end;
time information related to the measurement on the target end; or
a measurement quantity of the target end.

Optionally, the time information related to the measurement on the target end includes at least one of the following:
a starting time when the performing measurement on the target end starts;
an ending time when the performing measurement on the target end ends;
a transmission period during which the measurement result obtained by performing measurement on the target end is transmitted to the first network node; or
a transmission frequency at which the measurement result obtained by performing measurement on the target end is transmitted to the first network node.

Optionally, the measurement quantity of the target end includes at least one of the following:
a reporting parameter of terminal measurement;
a statistics quantity of terminal measurement at layer 2;
a stable residence time of the terminal;
quality of experience (QoE) visible to the second network node;
minimization of drive tests;
a statistics quantity of cell measurement at layer 2;
an energy efficiency of the cell; or
a key performance indicator (KPI) of the cell.

Optionally, the target measurement result includes at least one of the following:
a measurement result of a reporting parameter of terminal measurement;
a measurement result of a statistics quantity of terminal measurement at layer 2;
a measurement result of a stable residence time of the terminal;
a measurement result of quality of experience (QoE) visible to the second network node;
a measurement result of minimization of drive tests;
a measurement result of a statistics quantity of cell measurement at layer 2;
a measurement result of an energy efficiency of the cell; or
a measurement result of a KPI of the cell.

Optionally, the transceiver 700 is further configured to: receive the measurement request message transmitted by the first network node through a handover request message, where the measurement request message is used to request the second network node to perform measurement on the terminal according to the measurement requirement.

Optionally, the transceiver 700 is further configured to: receive the measurement request message transmitted by the first network node through a secondary node addition request message, where the measurement request message is used to request the second network node to perform measurement on the terminal according to the measurement requirement.

The network node according to the embodiment of the present disclosure receives a measurement request message transmitted by a first network node, where the measurement request message is used to request the second network node to perform measurement on a target end according to a measurement requirement, and the target end includes a terminal and/or a cell; performs measurement on the target end according to the measurement requirement to obtain a target measurement result in a case where the measurement requirement is able to meet; and transmits the target measurement result to the first network node. In this way, the target measurement result returned by the second network node satisfies the requirement for a first network node to collect feedback data, that is, to realize information collection and feedback between network nodes, so that the first network node that uses the AI technology to make a decision can effectively correct and optimize the prediction result.

As shown in FIG. 8, an embodiment of the present disclosure further provides an information communication apparatus, which is applied to a second network node. The apparatus includes:
a second receiving unit 801, configured to receive a measurement request message transmitted by a first network node, where the measurement request message is used to request the second network node to perform measurement on a target end according to a measurement requirement, and the target end includes a terminal and/or a cell;
a measurement unit 802, configured to perform measurement on the target end according to the measurement requirement to obtain a target measurement result in a case where the measurement requirement is able to meet; and
a second transmitting unit 803, configured to transmit the target measurement result to the first network node.

Optionally, the measurement request message includes one or more of the following information:
identification information of the target end;
time information related to the measurement on the target end; or
a measurement quantity of the target end.

Optionally, the time information related to the measurement on the target end includes at least one of the following:
a starting time when the performing measurement on the target end starts;
an ending time when the performing measurement on the target end ends;
a transmission period during which the measurement result obtained by performing measurement on the target end is transmitted to the first network node; or
a transmission frequency at which the measurement result obtained by performing measurement on the target end is transmitted to the first network node.

Optionally, the measurement quantity of the target end includes at least one of the following:
a reporting parameter of terminal measurement;
a statistics quantity of terminal measurement at layer 2;
a stable residence time of the terminal;
quality of experience (QoE) visible to the second network node;
minimization of drive tests;
a statistics quantity of cell measurement at layer 2;
an energy efficiency of the cell; or
a key performance indicator (KPI) of the cell.

Optionally, the target measurement result includes at least one of the following:
a measurement result of a reporting parameter of terminal measurement;
a measurement result of a statistics quantity of terminal measurement at layer 2;
a measurement result of a stable residence time of the terminal;
a measurement result of quality of experience (QoE) visible to the second network node;
a measurement result of minimization of drive tests;
a measurement result of a statistics quantity of cell measurement at layer 2;
a measurement result of an energy efficiency of the cell; or
a measurement result of a KPI of the cell.

Optionally, the second receiving unit 801 is specifically configured to: receive the measurement request message transmitted by the first network node through a handover request message, where the measurement request message is used to request the second network node to perform measurement on the terminal according to the measurement requirement.

Optionally, the second receiving unit 801 is specifically configured to: receive the measurement request message transmitted by the first network node through a secondary node addition request message, where the measurement request message is used to request the second network node to perform measurement on the terminal according to the measurement requirement.

The information communication apparatus in the embodiment of the present disclosure receives a measurement request message transmitted by a first network node, where the measurement request message is used to request the second network node to perform measurement on a target end according to a measurement requirement, and the target end includes a terminal and/or a cell; performs measurement on the target end according to the measurement requirement to obtain a target measurement result in a case where the measurement requirement is able to meet; and transmits the target measurement result to the first network node. In this way, the target measurement result returned by the second network node satisfies the requirement for a first network node to collect feedback data, that is, to realize information collection and feedback between network nodes, so that the first network node that uses the AI technology to make a decision can effectively correct and optimize the prediction result.

It should be noted that the division of units in the embodiments of the present application is illustrative, and is only a logical function division, and there may be another division manner in actual implementation. In addition, the functional units in various embodiments of the present application may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present application, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present application. The aforementioned storage media include: universal serial bus (USB) flash drive, removable hard disk, read-only memory (ROM), random access memory (RAM), magnetic disk, optical disc or other media that can store program codes.

It should be noted that the above apparatus provided in the embodiments of the present disclosure can implement all method steps implemented in the above method embodiments, and can achieve the same technical effects. Therefore, the description and the beneficial effect of this embedment that are the same as the method embodiments will not be introduced here in detail.

In some embodiments of the present disclosure, a processor-readable storage medium is further provided. The processor-readable storage medium stores program instructions, and the program instructions are configured to cause a processor to perform the following steps:
receiving a measurement request message transmitted by a first network node, where the measurement request message is used to request the second network node to perform measurement on a target end according to a measurement requirement, and the target end includes a terminal and/or a cell;
performing measurement on the target end according to the measurement requirement to obtain a target measurement result in a case where the measurement requirement is able to meet; and
transmitting the target measurement result to the first network node.

The program, when executed by the processor, may realize all the implementations in the above method embodiment applied to the second network node side as shown in FIG. 3. To avoid duplication, details will not be described here.

It is noted that the technical solution according to embodiments of the present application may be applied to various systems, particularly to a 5G system. For example, an applicable system may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, and a 5G New Radio (NR) system. Each of the various systems includes a terminal and a network device. The systems may further include a core network portion, such as an evolved packet system (EPS), or a 5G system (5GS).

The terminal device involved in the embodiments of the present application may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (UE). A wireless terminal can communicate with one or more core networks (CNs) via a radio access network (RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (PCS) phones, cordless phones, session initiated protocol (SIP) phones, wireless local loop (WLL) stations, personal digital assistant (PDA) and other devices. The wireless terminal may also be referred to as a system, subscriber unit, subscriber station, mobile station, mobile, remote station, access point, remote terminal, access terminal, user terminal, user agent and user device, which are not limited in the embodiments of the present application.

The network device involved in the embodiments of the present application may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (IP) packets or vice versa, and serves as a router between the wireless terminals and the rest of the access network. The rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), a NodeB in the wide-band code division multiple access (WCDMA), an evolved Node B (eNB or e-NodeB) in long term evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be geographically separated.

The network device and the terminal may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, pre-coded transmission, beam forming transmission, or the like.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Those skilled in the art should appreciate that the embodiments of the present application may be provided as a method, a system, or a computer program product. Therefore, the present application may take the form of complete hardware embodiments, complete software embodiments, or embodiments combining software and hardware. Moreover, the present application may take the form of a computer program product implemented on one or more computer usable storage media (including but not limited to magnetic disk storage, optical storage, etc.) including a computer usable program code.

The present application is described with reference to the flow chart and/or the block diagram of the method, device (system), and computer program product according to the embodiments of the present application. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

Apparently, a person of ordinary skills in the art can make various modifications and variations to the present application without departing from the spirit and scope of the present application. In this way, if these modifications and variations of the present application fall within the scope of the claims and their equivalent technologies, the present application also intends to include these modifications and variations.

## Claims

1. An information communication method, applied to a first network node, comprising:
transmitting a measurement request message to a second network node, wherein the measurement request message is used to request the second network node to perform measurement on a target end according to a measurement requirement, and the target end comprises a terminal and/or a cell; and
receiving a target measurement result of the measurement performed on the target end transmitted by the second network node in a case where the measurement requirement is able to meet.

2. The method according to claim 1, wherein the measurement request message comprises one or more of the following information:
identification information of the target end;
time information related to the measurement on the target end; or
a measurement quantity of the target end.

3. The method according to claim 2, wherein the time information related to the measurement on the target end comprises at least one of the following:
a starting time when the performing measurement on the target end starts;
an ending time when the performing measurement on the target end ends;
a period for transmitting the measurement result obtained by performing measurement on the target end to the first network node; or
a frequency for transmitting the measurement result obtained by performing measurement on the target end to the first network node.

4. The method according to claim 2, wherein the measurement quantity of the target end comprises at least one of the following:
a reporting parameter of terminal measurement;
a statistics quantity of terminal measurement at layer 2;
a stable residence time of the terminal;
quality of experience (QoE) visible to the second network node;
minimization of drive tests;
a statistics quantity of cell measurement at layer 2;
an energy efficiency of the cell; or
a key performance indicator (KPI) of the cell.

5. The method according to claim 1, further comprising:
obtaining first decision information of the first network node, wherein the first decision information is used to make a decision to switch the terminal from the first network node to the second network node,
wherein the transmitting the measurement request message to the second network node comprises:
transmitting the measurement request message to the second network node according to the first decision information, wherein the measurement request message is used to request the second network node to perform measurement on the terminal according to the measurement requirement.

6. The method according to claim 5, wherein the transmitting the measurement request message to the second network node comprises:
transmitting the measurement request message to the second network node through a handover request message.

7. The method according to claim 1, further comprising:
obtaining second decision information of the first network node, wherein the second decision information is used to make a decision to establish a dual connection for the terminal at the first network node and select a candidate secondary node,
wherein the transmitting the measurement request message to the second network node comprises:
transmitting the measurement request message to the second network node according to the second decision information, wherein the measurement request message is used to request the second network node to perform measurement on the terminal according to the measurement requirement.

8. The method according to claim 7, wherein the transmitting the measurement request message to the second network node comprises:
transmitting the measurement request message to the second network node through a secondary node addition request message.

9. The method according to claim 1, further comprising:
obtaining third decision information of the first network node, wherein the third decision information is used to make a decision to switch a batch of terminals from the first network node to the second network node, or to make a decision to establish dual connections for a batch of terminals at the first network node and select candidate secondary nodes,
wherein the transmitting the measurement request message to the second network node comprises:
transmitting the measurement request message to the second network node according to the third decision information, wherein the measurement request message is used to request the second network node to perform measurement on the terminal and/or the cell according to the measurement requirement.

10. An information communication method, applied to a second network node, comprising:
receiving a measurement request message transmitted by a first network node, wherein the measurement request message is used to request the second network node to perform measurement on a target end according to a measurement requirement, and the target end comprises a terminal and/or a cell;
performing measurement on the target end according to the measurement requirement to obtain a target measurement result in a case where the measurement requirement is able to meet; and
transmitting the target measurement result to the first network node.

11. The method according to claim 10, wherein the measurement request message comprises one or more of the following information:
identification information of the target end;
time information related to the measurement on the target end; or
a measurement quantity of the target end.

12. The method according to claim 11, wherein the time information related to the measurement on the target end comprises at least one of the following:
a starting time when the performing measurement on the target end starts;
an ending time when the performing measurement on the target end ends;
a period for transmitting the measurement result obtained by performing measurement on the target end to the first network node; or
a frequency for transmitting the measurement result obtained by performing measurement on the target end to the first network node.

13. The method according to claim 11, wherein the measurement quantity of the target end comprises at least one of the following:
a reporting parameter of terminal measurement;
a statistics quantity of terminal measurement at layer 2;
a stable residence time of the terminal;
quality of experience (QoE) visible to the second network node;
minimization of drive tests;
a statistics quantity of cell measurement at layer 2;
an energy efficiency of the cell; or
a key performance indicator (KPI) of the cell.

14. The method according to claim 13, wherein the target measurement result comprises at least one of the following:
a measurement result of a reporting parameter of terminal measurement;
a measurement result of a statistics quantity of terminal measurement at layer 2;
a measurement result of a stable residence time of the terminal;
a measurement result of quality of experience (QoE) visible to the second network node;
a measurement result of minimization of drive tests;
a measurement result of a statistics quantity of cell measurement at layer 2;
a measurement result of an energy efficiency of the cell; or
a measurement result of a KPI of the cell.

15. The method according to claim 10, wherein the receiving the measurement request message transmitted by the first network node comprises:
receiving the measurement request message transmitted by the first network node through a handover request message, wherein the measurement request message is used to request the second network node to perform measurement on the terminal according to the measurement requirement.

16. The method according to claim 10, wherein the receiving the measurement request message transmitted by the first network node comprises:
receiving the measurement request message transmitted by the first network node through a secondary node addition request message, wherein the measurement request message is used to request the second network node to perform measurement on the terminal according to the measurement requirement.

17. A network node, wherein the network node is a first network node, and comprises a memory, a transceiver and a processor; the memory is configured to store program instructions; the transceiver is configured to transmit and receive data under the control of the processor; and the processor is configured to read the program instructions in the memory to perform the following operations:
transmitting a measurement request message to a second network node through the transceiver, wherein the measurement request message is used to request the second network node to perform measurement on a target end according to a measurement requirement, and the target end comprises a terminal and/or a cell; and
receiving a target measurement result of the measurement performed on the target end transmitted by the second network node in a case where the measurement requirement is able to meet.

18. An information communication apparatus, comprising:
a first transmitting unit, configured to transmit a measurement request message to a second network node, wherein the measurement request message is used to request the second network node to perform measurement on a target end according to a measurement requirement, and the target end comprises a terminal and/or a cell; and
a first receiving unit, configured to receive a target measurement result of the measurement performed on the target end transmitted by the second network node in a case where the measurement requirement is able to meet.

19. A network node, wherein the network node is a second network node, and comprises a memory, a transceiver and a processor; the memory is configured to store program instructions; the transceiver is configured to transmit and receive data under the control of the processor; and the processor is configured to read the program instructions in the memory to perform the following operations:
receiving, through the transceiver, a measurement request message transmitted by a first network node, wherein the measurement request message is used to request the second network node to perform measurement on a target end according to a measurement requirement, and the target end comprises a terminal and/or a cell;
performing measurement on the target end according to the measurement requirement to obtain a target measurement result in a case where the measurement requirement is able to meet; and
transmitting the target measurement result to the first network node through the transceiver.

20. An information communication apparatus, comprising:
a second receiving unit, configured to receive a measurement request message transmitted by a first network node, wherein the measurement request message is used to request a second network node to perform measurement on a target end according to a measurement requirement, and the target end comprises a terminal and/or a cell;
a measurement unit, configured to perform the measurement on the target end according to the measurement requirement to obtain a target measurement result in a case where the measurement requirement is able to meet; and
a second transmitting unit, configured to transmit the target measurement result to the first network node.

21. A processor-readable storage medium, wherein the processor-readable storage medium stores a computer program, and the computer program is configured to cause a processor to perform steps of the information communication method according to any one of claims 1 to 9; or to perform steps of the information communication method according to any one of claims 10 to 16.
